# EUROPÄISCHE PATENTSCHRIFT

(11) **EP 0 809 440 B1**
(45) Veröffentlichungstag und Bekanntmachung des Hinweises auf die Patenterteilung: **22.03.2000**
(21) Anmeldenummer: 96901774.8
(22) Anmeldetag: 29.01.1996
(51) Int. Cl.: A22C 13/00

(54) **ESSBARE KOLLAGENHÜLLE**
EDIBLE COLLAGEN CASING
ENVELOPPE DE COLLAGENE COMESTIBLE

(30) Priorität: 13.02.1995 DE 19504704
(43) Veröffentlichungstag der Anmeldung: 03.12.1997
(73) Patentinhaber: Naturin GmbH & Co, D-69469 Weinheim (DE)
(72) Erfinder: ERK, Gayyur, D-69469 Weinheim (DE)
(74) Vertreter: Siewers, Gescha, Dr.
(86) Internationale Anmeldenummer: EP9600338
(87) Internationale Veröffentlichungsnummer: WO9625047

(56) Entgegenhaltungen:
- EP-A- 0 083 126
- EP-A- 0 338 365
- DE-A- 1 570 178
- DE-A- 2 207 217
- DE-B- 1 199 112
- DE-C- 650 526
- FR-A- 1 583 367
- US-A- 3 620 775

## Beschreibung

Die Erfindung betrifft eßbare Kollagenkranzhüllen zur Herstellung von Wurstwaren und anderen Lebensmitteln, sowie ein Verfahren zu deren Herstellung.

Zur Herstellung von Wurstwaren werden Naturdärme und zunehmend Kunstdärme auf Kollagen- oder Cellulosebasis eingesetzt. Für bestimmte Sorten von Wurstwaren, wie beispielsweise Bratwürste und Würstchen werden bis heutehin fast ausnahmslos Naturdärme, und zwar Schafssaitlinge, verwendet, da Därme auf Kollagenbasis bislang die gefestigten Verbrauchererwartungen nicht befriedigen konnten.

Die Herstellung dünnwandiger gerade Kollagendärme ist dem Fachmann hinreichend bekannt, so z.B. aus den US-Patentschriften 3535125, 3620775 oder 3505084 oder aus der deutschen Patentschrift 972854. Aus der europäischen Patentanmeldung 82 201 591 ist es bekannt, koagulierbare amphoterische hochmolekulare Substanzen zu extrudieren und beim isoelektrischen Punkt, ggf. unter vorheriger Behandlung mit Ammoniak, zu koagulieren. Aus der französischen Patentschrift 1583367 ist die Verwendung von Ammoniak im Inneren des Folienschlauches als Koagulierungsmittel beschrieben.

In der deutschen Offenlegungsschrift 22 07 217 werden bereits Kranzdärme aus Kollagen für Rohwürste beschrieben, bei denen eine Salzbehandlung durch Besprühung oder Auftropfung einer Salzlösung vor dem Trocknungsvorgang der Extruderfolie erfolgt, um ein Durchhängen durch unterschiedliche Längendehnung des Folienschlauches zu vermeiden. Als Alternative zu den dickwandigen und zähen Schweinekranzdärmen ist es aber auch bekannt, Kollagendärme einzusetzen, wie sie beispielsweise in der deutschen Patentschrift 23 14 767 beschrieben werden. Bei diesem Verfahren zur Herstellung kranzförmiger Wursthüllen werden rotierende, konisch durchgehende Umlaufflächen eingesetzt, wobei die extrudierte aufgeblasene Kollagenhülle über mehrere hintereinander angeordnete, konisch ausgeformte Tragelemente mit Hilfe von verstellbaren Abhebevorrichtungen transportiert und gleichzeitig mit auf 50°C erwärmte Luft getrocknet wird. Die auf diese Art herstellbaren Kollegenkranzdärme sind allerdings hinsichtlich ihrer optischen und verzehrsensorischen Eigenschaften mit Schafssaitlingen in keiner Weise zu vergleichen. Nachdem in der deutschen Patentschrift 2314767 beschriebenen Verfahren können auch keine dünnwandigen Kranzdärme in einem Kaliberbereich von 13 bis 23 mm in industriellem Maßstab hergestellt werden, denn dann wäre es notwendig, niedrigviskose Kollagenmasse mit einem Trockenkollagengehalt von 3,5 bis 6,0% einzusetzen. Eine solche Kollagenmasse ist jedoch nicht hinreichend strukturfest, sondern sie ist klebrig, so daß sich die in der deutschen Patentschrift 2314767 beschriebene Produktionstechnik zur Herstellung solcher Ware nicht eignet.

Der Erfindung liegt daher die Aufgabe zugrunde, eßbare Kollagenkranzdärme zu entwickeln, die als Alternative zum Schafssaitling einsetzbar sind.

Zur Lösung dieser Aufgabe werden eßbare Kollagenhüllen mit einem Kaliber zwischen etwa 13 bis 23 mm und einer Wandstärke von unter 0,035 gemäß Anspruch 1 vorgeschlagen.

Überraschenderweise wurde jetzt festgestellt, daß sich eßbare zarte dünnwandige Kollagenkranzdärme in industriellem Maßstab herstellen lassen, wenn die Lehre der deutschen Patentschrift 2314767 dergestalt variiert wird, daß der aus der Kollagensuspension gefertigte Folienschlauch unmittelbar nach dem Extrusionskopf sowohl von innen wie auch von außen mit Koagulierungsmitteln behandelt wird, wobei im Schlauchinneren Ammoniak und für die äußere Oberfläche ebenfalls Ammoniak, vorzugsweise aber konzentrierte wäßrige Lösungen von stark koagulierenden anorganischen Salzen eingesetzt werden. Auf diese Weise wird eine Spontankoagulation des empfindlichen Kollagenextrudates zwingend herbeigeführt. Durch diese Maßnahme werden sowohl die Klebrigkeit als auch die Strukturschwäche des frischextrudierten aufgeblasenen Kollagenschlauches schon vor dem Ablegen auf das konische Transportsegment gemäß der DE-PS 2314767 soweit minimiert, daß eine kontinuierliche Fertigung dünnwandiger und kleinkalibriger Kollagenkranzhüllen mit einem Kaliber zwischen 13 bis 23 mm und einer Wandstärke von unter 0,035 mm möglich ist.

Vorzugsweise erfolgt die Zuführung des gasförmigen Ammoniaks in den Kollagenschlauch durch eine in den Extrusionskopf integrierte Zuleitung. Das Besprühen der äußeren Schlauchoberfläche mit einer gesättigten Lösung eines starken Koagulationsmittels erfolgt vorzugsweise durch gleichmäßig an der Umfangsperipherie des Schlauches angeordnete Sprühdüsen. Anschließend an die Koagulation wird der Kollagenschlauch vorgetrocknet, dann zur Entfernung der gebildeten anorganischen Salze mit Wasser gewaschen, wobei anschließend gemäß dem in der DE-PS 2314767 beschriebenen Verfahren die Folgeschritte, Gerben, Weichmachen, Trocknen, Wiederbefeuchten und Aufwickeln bzw. Raffen vollzogen werden. Diese Verfahrensschritte sind bekannt und Stand der Technik und sind nicht Gegenstand dieser Erfindung.

Die Menge des dem Schlauchinneren zugeführten gasförmigen Ammoniaks und die Menge sowie die Konzentration des außenseitig auf die Oberfläche gesprühten Koagulationsmittels kann in weiten Grenzen variiert werden, solange eine schnelle Koagulation des frischextrudierten Schlauches aus feststoffarmen Kollagenmassen sicher gewährleistet ist, was durch einfache Vorversuche festgestellt werden kann. Durch die Koagulation wird auch das Kleben auf den konischen Trag- und Transportsegmenten der Vorrichtung gemäß DE-PS 2314767 sicher unterbunden und außerdem sorgt die gleichzeitige Doppelkoagulation von innen und außen dafür, daß das Aufreißen des Schlauches beim Aufblasen des Extrudates mit Kalibrierluft nachhaltig verhindert wird.

Im Prinzip kann die Doppelkoagulation von innen sowie auch von außen mit Ammoniak durchgeführt werden, aber es wird bevorzugt, für die äußere Oberfläche flüssige Koagulierungsmittel einzusetzen, da diese eine viel effektivere Trenn- und Schmiermittelwirkung zwischen Schlauchaußenoberfläche und den konischen Umlaufflächen aufweisen. Wenn für innen und außen nur Ammoniak in gasförmiger Form eingesetzt wird, ist die Trenn- und Schmierwirkung sehr viel geringer und gerade noch akzeptabel, so daß mit hin und wieder auftretenden Produktionsunterbrechungen gerechnet werden muß.

Die erfindungsgemäßen Kollagenhüllen weisen vorzugsweise einen Kranzringinnendurchmesser von etwa 100 bis 350 mm auf, da sie dann ein dem Schafssaitling äquivalentes Aussehen zeigen. Die Wandstärken der Hülle können entweder gleich sein, es ist aber auch möglich, unterschiedliche Wandstärken einzusetzen, wobei vorzugsweise die Wandstärke des Kranzringinnendurchmessers geringfügig größer als diejenige des Kranzringaußendurchmessers ist.

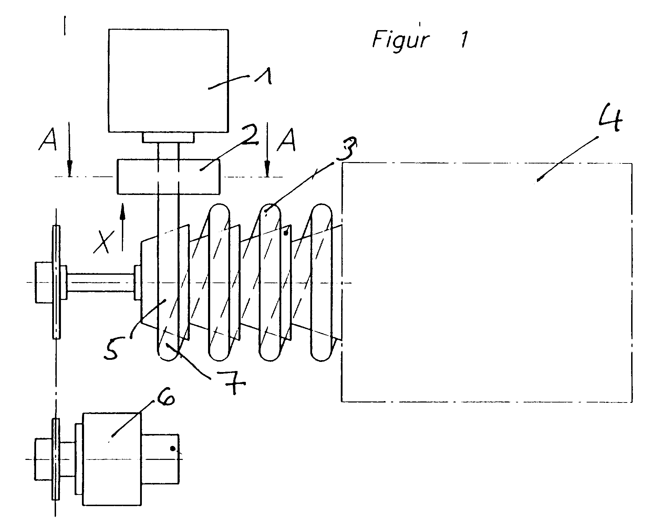

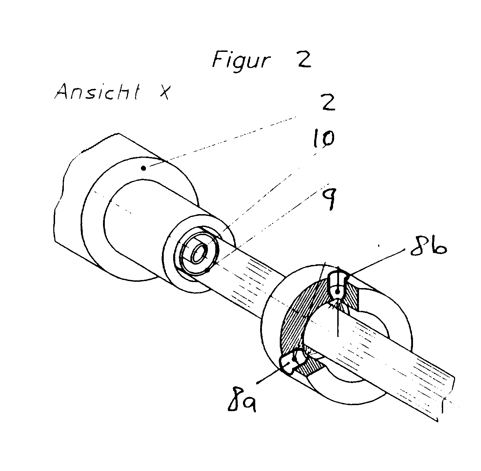

Die Erfindung wird im Folgenden schematisch anhand der Figuren 1 und 2 erläutert.

Figur 1 zeigt die erfindungsgemäße Anordnung zur Herstellung der Kranzhüllen.

Figur 2 zeigt die erfindungsgemäße Anordnung in der Ansicht X.

Die erfindungsgemäße Vorrichtung zeigt den Extruder 1 mit Extruderkopf 2 in direkter räumlicher Nähe zur Topfwelle 3, die durch den Trockner 4 führt. Der extrudierte Kollagenschlauch 5 wird nach dem Verlassen des Extruderkopfes auf die zeitlich synchronisierte Topfwelle mit den konischen Transportsegmenten abgelegt, wobei die Kranzringfixierung nach den bekannten Verfahren gemäß der deutschen Patentschrift 2314767 erfolgt.

Aus dem Schnitt lang der Linie A bis A ergibt sich, daß direkt anschließend an den Extruderkopf, dessen Luftführung mit einer Zuleitung für gasförmiges Ammoniak versehen ist, der aufgeblasene Folienschlauch die in kurzem Abstand angeordneten Sprühdüsen 8a, 8b und 8c erreicht, die für einen gleichmäßigen oberflächlichen Auftrag eines flüssigen Koagulationsmittels sorgen. Aus Figur 2 läßt sich das räumliche Verhältnis zwischen Extruderkopf mit Ammoniakzufuhr und der Düsenanordnung im einzelnen entnehmen.

Weiterhin wird die Erfindung an nachfolgenden Beispielen erläutert:

### Beispiel 1

Aus einer auf bekannte Weise, beispielsweise nach dem Verfahren der DE-PS 972854 hergestellten Kollagenmasse mit einem Kollagengehalt von 5,0 %, bezogen auf das Trockenkollagen, wird durch eine Düse mit außermittig justiertem Kern ein leicht gekrümmter Schlauch mit einem Durchmesser von 16,2 mm bei einer Geschwindigkeit von 10 m/min extrudiert. Der mit Kopfluft auf den gewünschten Ausgangsdurchmesser aufgeblasene Kollagenschlauch wird innenseitig mit einem kontinuierlichen Ammoniakstrom beaufschlagt und gleichzeitig außenseitig mittels 3 im 90° Winkel an der Umfangsperipherie angeordneter Spezialdüsen mit gesättigter Kochsalzlösung ganzflächig besprüht. Die Anordnung der Koagulationsvorrichtung entspricht in der Ansicht der oben erwähnten Figur 2.

Der aufgrund dieser Behandlung rasch koagulierende Kollagenschlauch wird unmittelbar danach auf die aus der DE-PS 2314767 bekannten Kränzelungsvorrichtung abgelegt, die exakt mit der Extrusionsgeschwindigkeit des Kollagenschlauches rotiert. Nach einer Vortrocknung mit erwärmter Luft passiert der Kollagenschlauch während des Weitertransportes im Kanal zunächst eine Strecke mit einer Wasserdusche, um die Hülle von den gebildeten Salzen wie Ammoniumchlorid und Kochsalz zu befreien. Anschließend wird auf an sich bekannte Art gegerbt, weichgemacht, getrocknet, rückbefeuchtet und aufgewickelt.

Der so erhaltene eßbare Kollagenkranzdarm hat eine Wandstärke von 0,025 bis 0,028 mm und einen Füllkaliber von 17 mm. Er eignet sich hervorragend zur Herstellung von sogenannten Nürnberger Bratwürstchen. Beim Grillen und Braten sowie beim Vergleich der sensorischen Eigenschaften läßt sich kein signifikanter Unterschied zwischen diesem Kollagenkranzdarm und den mit einem Schafssaitling hergestellten Bratwürstchen feststellen.

Ein besonderer Vorzug der erfindungsgemäßen Kollagenhüllen im Gegensatz zum Schafssaitling liegt jedoch darin, daß Würstchen mit konstantem Gewicht und exakt reproduzierbarer Geometrie herstellbar sind.

### Beispiel 2

Die Kollagenmasse wird wie in Beispiel 1 beschrieben behandelt, jedoch wird die Koagulation durch eine 42%-ige Ammoniumsulfatlösung herbeigeführt, wobei eine außermittig justierte Düse mit dem Innendurchmesser 19,5 mm eingesetzt wird. Das Verfahren ergibt eine Kollagenkranzhülle des Nennkalibers 21 mm. Das Produkt weist Eigenschaften auf, die mit denen des Beispiels 1 vergleichbar sind.

### Beispiel 3

Die Kollagenmasse wird wie in Beispiel 1 beschrieben extrudiert, ohne daß jedoch unmittelbar nach der Extrusion eine innenseitige Ammoniakbehandlung des Kollagenschlauches erfolgt. Der strukturschwache, klebrige Extrusionsschlauch reißt häufig und hat Schwachstellen beim Aufblasen mit der Kalibrierluft. Eine kontinuierliche Produktion ist auf diese Weise nicht möglich.

### Beispiel 4

Die Kollagenmasse wird wie in Beispiel 1 beschrieben extrudiert, jedoch wird die äußere Oberfläche nicht mit einem flüssigen Koagulationsmittel besprüht.

Bei diesem Verfahren klebt der Extrusionsschlauch sofort auf dem Kränzelungssegment fest und reißt ein. Es ist keine kontinuierliche Produktion möglich.

## Patentansprüche

1. Eßbare, im Extrudierverfahren hergestellte Kollagenhülle mit einem Kaliber zwischen etwa 13 bis 23 mm und einer Wandstärke von unter 0,035 mm, dadurch gekennzeichnet, daß sie im Trockenspinnverfahren und durch eine direkt nach der Extrusion erfolgende gleichzeitige Behandlung mit Ammoniak und Aufsprühung eines Koagulationsmittels in gekränzelter Form herstellbar ist und daß die zur Herstellung eingesetzte Kollagenmasse einen Trockenkollagengehalt von unter 6,0% aufweist.

2. Kollagenhülle nach Anspruch 1, dadurch gekennzeichnet, daß sie aus Rinderhautkollagen bestehen.

3. Kollagenhüllen nach Anspruch 1 bis 2, dadurch gekennzeichnet, daß der Kranzringinnendurchmesser 100 bis 350 mm beträgt.

4. Kollagenhüllen nach Anspruch 1 bis 3, dadurch gekennzeichnet, daß die Wandstärke beim Außen- und Innendurchmesser des Kranzringes gleich groß ist.

5. Eßbare Kollagenhülle nach Anspruch 1 bis 4, dadurch gekennzeichnet, daß die Wandstärke des Innen- und Außendurchmessers des Kranzringes unterschiedlich ist.

6. Kollagenhülle nach Anspruch 1 bis 4 und 5, dadurch gekennzeichnet, daß die Wandstärke des Innendurchmessers des Kranzringes größer ist als die des Außendurchmessers.

7. Verfahren zur Herstellung von eßbaren gekränzelten Kollagenhüllen, dadurch gekennzeichnet, daß ein Folienschlauch mit einem Kaliber von 13 bis 23 mm und einer Wandstärke von unter 0,035 mm im Trockenspinnverfahren unmittelbar nach der Extrusion im Inneren mit gasförmigem Ammoniak behandelt und gleichzeitig auf der äußeren Oberfläche starken Koagulationsmitteln mittels Aufsprüchen ausgesetzt wird, worauf der Folienschlauch in an sich bekannter Weise gekränzelt und konfektioniert wird, und daß die zur Herstellung eingesetzte Kollagenmasse einen Trockenkollagengehalt von unter 6,0% aufweist.

8. Verfahren nach Anspruch 1 bis 7, dadurch gekennzeichnet, daß das gasförmige Ammoniak direkt durch eine im Extrusionskopf integrierte Zuleitung in den aufgeblasenen Schlauch eingebracht wird.

9. Verfahren nach Anspruch 1 bis 8, dadurch gekennzeichnet, daß das gasförmige oder flüssige für die Außenoberfläche bestimmte Koagulierungsmittel in geringem Abstand vom Extrusionskopf auf die Oberfläche des Schlauches gleichmäßig aufgebracht wird.

10. Verfahren nach Anspruch 7 bis 9, dadurch gekennzeichnet, daß als flüssiges Koagulationsmittel wäßrige gesättigte anorganische Salzlösungen eingesetzt werden.

11. Verfahren nach Anspruch 7 bis 10, dadurch gekennzeichnet, daß als Koagulationsmittel Natriumchlorid, Natriumsulfat oder Ammoniumsulfat eingesetzt werden.

12. Verfahren nach Anspruch 7 bis 11, dadurch gekennzeichnet, daß der Folienschlauch nach der Koagulation kurz vorgetrocknet, dann äußerlich mit Wasser besprüht und anschließend in an sich bekannter Weise gegerbt, weichgemacht, wiedergetrocknet, rückbefeuchtet und aufgewickelt oder gerafft wird.

13. Verfahren nach Anspruch 7 bis 12, dadurch gekennzeichnet, daß die Wandstärke des den Kranzring bildenden Folienschlauches über den gesamten Umfang gleich ist.

14. Verfahren nach Anspruch 7 bis 13, dadurch gekennzeichnet, daß die Wandstärke des den Kranzring bildenden Folienschlauches unterschiedlich ist.

15. Verfahren nach Anspruch 1 bis 14, dadurch gekennzeichnet, daß die Wandstärke des den Kranzringinnendurchmessers bildenden Folienschlauches größer als die des Kranzringaußendurchmessers ist.

16. Verwendung der eßbaren Kollagenhülle nach Anspruch 1 bis 7 als Verpackungsmaterial für Lebensmittel, insbesondere Wurst- und Fleischwaren.

17. Verwendung der Kollagenhüllen nach Anspruch 1 bis 7 als Umhüllungsmaterial für Wurstwaren, insbesondere Bratwürste und Wieder Würste.

## Claims

1. Edible collagen casings, produced by extrusion, having a caliber between approximately 13 and 23 mm and a wall thickness of less than 0,035 mm, characterized in that they are produced by dry spinning and by means of a simultaneous treatment with ammonia and a coagulant that takes place directly after the extrusion, and that the solid content of the collagen compound processed to make the tubular skin is below 6%, referred to dry collagen.

2. The collagen casings of claim 1 or 2, characterized in that they comprise collagen from cowhides.

3. The collagen casings of claims 1-2, characterized in that the inside diameter of the garland ring is 100 to 350 mm.

4. The collagen casings of claims 1-3, characterized in that the wall thickness is the same at both the outside and inside diameter of the garland ring.

5. The edible collagen casing of claims 1-4, characterized in that the wall thickness differs at the inside and outside diameter of the garland ring.

6. The collagen casing of claims 1-4 and 5, characterized in that the wall thickness at the inside diameter of the garland ring is greater than that at the outside diameter.

7. A method for producing garlanded edible collagen casings, characterized in that a tubular skin with a caliber of 13 to 23 mm and wall thickness of less than 0,035 mm is treated directly after the extrusion with gaseous ammonia on its interior and at the same time is exposed on the outer surface to strong coagulants, whereupon the tubular skin is garlanded and packaged in a manner known per se, and that the solid content of the collagen compound processed to make the tubular skin is below 6%, referred to dry collagen.

8. The method of claims 1-7, characterized in that the gaseous ammonia is introduced directly into the inflated tube through a feed line integrated with the extrusion head.

9. The method of claims 1-8, characterized in that the gaseous or liquid coagulant intended for the outer surface is applied uniformly to the surface of the tube at a slight distance from the extrusion head.

10. The method of claims 7-9, characterized in that aqueous saturated inorganic salt solutions are used as the liquid coagulant.

11. the method of claims 7-10 characterized in that sodium chloride, sodium sulfate or ammonium sulfate is used as the coagulant.

12. The method of claims 7-11, characterized in that the tubular skin is briefly predried after the coagulation, then sprayed with water on its outside, and subsequently in a manner known per se is tanned, softened, redried, remoistened, and coiled up or gathered.

13. The method of claims 7-12, characterized in that the wall thickness of the tubular skin forming the garland ring is identical over the entire circumference.

14. The method of claims 7-13, characterized in that the wall thickness of the tubular skin forming the garland ring is variable.

15. The method of claims 1-14, characterized in that the wall thickness of the tubular skin forming the inside diameter of the garland ring is greater than that of the outside diameter of the garland ring.

16. The use of the edible collagen casing of claims 1-7 as packaging material for foodstuffs, in particular sausages and meat products.

17. The use of the collagen casings of claims 1-7 as casing material for sausages, in particular Bratwurst and Wiener Wurst.

## Revendications

1. Enveloppe de collagène comestible fabriquée par un procédé d'extrusion présentant un calibre compris entre environ 13 et 23 mm et une épaisseur de paroi inférieure à 0,035 mm, caractérisée par le fait qu'elle est fabriquée sous forme de couronne par un procédé de filage à sec et avec un traitement à l'ammoniaque et pulvérisation d'un agent de coagulation simultanés, intervenant immédiatement, après l'extrusion, et par le fait que la masse de collagène utilisée pour la fabrication présente une proportion de collagène sec inférieure à 6,0%.

2. Enveloppe de collagène selon revendication 1, caractérisée par le fait qu'elle est formée de collagène de peau de bovins.

3. Enveloppe de collagène selon revendications 1 à 2 revendication 1, caractérisée par le fait que le diamètre intérieur de la couronne est compris entre 100 et 350 mm.

4. Enveloppe de collagène selon revendications 1 à 3, caractérisée par le fait que l'épaisseur de paroi au niveau des diamètres extérieur et intérieur de la couronne est identique.

5. Enveloppe de collagène comestible selon revendications 1 à 4, caractérisée par le fait que l'épaisseur de paroi au niveau des diamètres extérieur et intérieur de la couronne est différente.

6. Enveloppe de collagène selon revendications 1 à 4 et 5, caractérisée par le fait que l'épaisseur de paroi au niveau du diamètre intérieur de la couronne est supérieure à l'épaisseur de paroi au niveau du diamètre extérieur.

7. Procédé de fabrication d'enveloppes de collagène comestible enroulées en couronne, caractérisé par le fait que l'on traite intérieurement un tube en film réalisé par un procédé de filage à sec, avec un calibre compris entre 13 et 23 mm et une épaisseur de paroi inférieure à 0,035 mm, avec de l'ammoniaque sous forme gazeuse et simultanément on applique par pulvérisation des agents de coagulation puissants sur sa surface extérieure puis, de manière connue en soi, on enroule en courunne le tube en film et on le confectionne, et par le fait que la masse de collagène utilisée pour la fabrication présente une proportion de collagène sec inférieure à 6,0%.

8. Procédé selon revendications 1 à 7, caractérisé par le fait l'ammoniaque gazeux est amené directement dans le tube gonflé par une conduite intégrée dans la tête d'extrusion.

9. Procédé selon revendications 1 à 8, caractérisé par le fait l'agent de coagulation gazeux ou liquide destiné à la surface extérieure est appliqué de manière uniforme sur la surface du tube à une faible distance de la tête d'extrusion.

10. Procédé selon revendications 7 à 9, caractérisé par le fait que l'on utilise comme agent de coagulation liquide des solution aqueuses saturées de sels minéraux.

11. Procédé selon revendications 7 à 10, caractérisé par le fait que l'on utilise comme agent de coagulation du chlorure de sodium, du sulfate de sodium ou du sulfate d'ammonium.

12. Procédé selon revendications 7 à 11, caractérisé par le fait que l'un sèche brièvement le tube en film après la coagulation, puis on pulvérise extérieurement de l'eau sur celui-ci, après quoi, de manière connue en soi, on le corroie, on le ramollit, on le sèche de nouveau, on l'humidifie et on l'enroule ou on le fronce.

13. Procédé selon revendications 7 à 12, caractérisé par le fait que l'épaisseur de paroi du tube en film formant la couronne est constante sur toute la circonférence .

14. Procédé selon revendications 7 à 13, caractérisé par le fait que l'épaisseur de paroi du tube en film formant la couronne varie.

15. Procédé selon revendications 1 à 14, caractérisé par le fait que l'épaisseur de paroi de tube en film formant la couronne, au niveau de diamètre intérieur, est supérieure à l'épaisseur de paroi du tube en film au niveau du diamètre extérieur.

16. Utilisation de l'enveloppe de collagène comestible selon revendications 1 à 7 en tant matière d'emballage pour des produits alimentaires, en particulier pour des saucisses et de la viande.

17. Utilisation de l'enveloppe de collagène comestible selon revendications 1 à 7 en tant qu'enveloppe pour des saucisses, en particulier pour des saucisses à griller et des saucisses dites de Vienne.
